# EUROPEAN PATENT SPECIFICATION

(11) **EP 2 952 685 B1**
(45) Date of publication and mention of the grant of the patent: **30.12.2020**
(21) Application number: 15170720.5
(22) Date of filing: 04.06.2015
(51) Int. Cl.: F01D 5/20

(54) **AIRFOIL FOR A GAS TURBINE ENGINE, A GAS TURBINE ENGINE AND A METHOD FOR REDUCING FRICTIONAL HEATING BETWEEN AIRFOILS AND A CASE OF A GAS TURBINE ENGINE**
SCHAUFEL FÜR EIN GASTURBINENTRIEBWERK, ZUGEHÖRIGES GASTURBINENTRIEBWERK UND VERFAHREN ZUR REDUZIERUNG VON ERHITZUNG DURCH REIBUNG ZWISCHEN SCHAUFELN UND EINEM GEHÄUSE EINES GASTURBINENTRIEBWERKS
AUBE POUR MOTEUR À TURBINE À GAZ, MOTEUR À TURBINE À GAZ ET PROCÉDÉ ASSOCIÉ DE RÉDUCTION DU RÉCHAUFFEMENT PAR FRICTION ENTRE DES AUBES ET UN CARTER DE MOTEUR À TURBINE À GAZ

(30) Priority: 04.06.2014 US 201462007567 P
(43) Date of publication of application: 09.12.2015
(73) Proprietor: United Technologies Corporation, Farmington, CT 06032 (US)
(72) Inventor: HANSEN, James O., Glastonbury, CT Connecticut 06033 (US); GUO, Changsheng, South Windsor, CT 06074 (US)
(74) Representative: Dehns

(56) References cited:
- EP-A1- 1 770 244
- EP-A1- 2 309 097
- EP-A1- 2 444 592
- EP-A1- 2 604 798
- EP-A1- 2 696 031
- EP-A2- 1 764 478
- EP-A2- 2 514 922
- FR-A- 370 215
- GB-A- 2 310 897
- US-A- 5 456 576
- Anonymous: "Oblique, adj., n., and adv.", Oxford English Dictionary, 1 March 2004 (2004-03-01), page 3, XP055215973, Retrieved from the Internet: URL:http://www.oed.com/view/Entry/129718?r esult=1&rskey=QF9KlW&&print [retrieved on 2015-09-24]

## Description

### Field of the Disclosure

The present disclosure relates generally to gas turbine engines and, more particularly, to an airfoil for a gas turbine engine, a gas turbine engine and a method for reducing frictional heating between airfoils and a case of a gas turbine engine.

### Background of the Disclosure

Gas turbine engines may typically include a fan, a compressor, a combustor, and a turbine, with an annular flow path extending axially through each. Initially, the fan, which is powered by the turbine, draws ambient air into the engine. Part of the air flows through the compressor where it is compressed or pressurized. The combustor then mixes and ignites the compressed air with fuel, generating hot combustion gases. These hot combustion gases are then directed from the combustor to the turbine where power is extracted from the hot gases by causing blades of the turbine to rotate. The other part of the airflow from the fan is used to generate forward thrust.

A fan section of the gas turbine engine may include a plurality of blades extending radially from a central rotor. The plurality of blades may be circumferentially spaced apart around the rotor, and a fan casing may enclose the rotor and blades. Conventionally, a tip of the fan blade comprises a flat surface parallel to and in sealing contact with the fan casing. Reduction of a clearance distance between the fan blade tips and the fan casing has been known to increase an efficiency of the gas turbine engine.

To further minimize the clearance distance, the fan casing may include an abradable seal designed to abrade when the tips of the fan blades are rotating against the coating during operation. Fan blade tips may undergo treatment to increase the wear resistance of the blade tips, which rub against the abradable seal. To improve erosion resistance, the airfoil surfaces of the fan blade may be coated with an erosion resistant coating, such as, polyurethane.

However, during operation, the erosion resistant coating may degrade or peel off the fan blade due to excessive blade tip heating when the blade tips rub against the abradable seal. This has been determined to be caused by a combination of excessive heat generation by friction, the low thermal conductivity of the abradable material and high thermal conductivity of the blade material. Accordingly, there exists a need for a solution to reduce frictional heating between the blade tips and the abradable seal in order to eliminate the degradation of the erosion resistant coating.

EP 2 696 031 discloses an airfoil according to the preamble of claim 1. Further airfoils of the prior art are disclosed in EP 2 309 097, EP 2 514 922, EP 2 604 798, EP 1 764 478, EP 2 444 592, GB 2310897, FR 370215 A, US 5456 576 A and EP 1770244 A1.

### Summary of the Disclosure

According to the invention, there is provided an airfoil for a gas turbine engine as set forth in claim 1.

In another refinement, the flat surface may be proximate a center of the tip, the oblique surface may descend from the flat surface to the first side, and the tip may further include a second oblique surface descending from the flat surface to the second side.

In another refinement, a width of the flat surface may be at least 2.54 mm (0.1 in).

In another refinement, a clearance angle of the oblique surface or surfaces from the flat surface may be between zero and five degrees (0-5°).

According to another embodiment, a gas turbine engine is disclosed. The gas turbine engine may comprise a fan section, a compressor section downstream of the fan section, a combustor section downstream of the compressor section, and a turbine section downstream of the combustor section. At least one of the fan section, the compressor section, and the turbine section may include a rotor, a plurality of airfoils, as described above, extending radially from the rotor, and a case surrounding the rotor and the plurality of airfoils.

In a refinement, the flat surfaces of the tips of the airfoils and the case may be in sealing contact.

In another refinement, the case may include an abradable seal on an inner surface of the case.

In another refinement, the flat surface and the oblique surface on the tip of each of the airfoils may be designed to cut through the abradable seal of the case.

In another refinement, the tips of the airfoils may have undergone treatment for increased wear resistance.

In another refinement, a width of the flat surface may vary from a leading edge to a trailing edge of the airfoil.

Also according to the invention, there is provided a method for reducing frictional heating between airfoils and a case of a gas turbine engine as set forth in claim 10.

These and other aspects and features of the disclosure will become more readily apparent upon reading the following detailed description when taken in conjunction with the accompanying drawings.

### Brief Description of the Drawings

FIG. 1 is a cross-sectional view of a gas turbine engine, according to an embodiment of the present disclosure;
FIG. 2 is a cross-sectional view of a fan section of the gas turbine engine of FIG. 1;
FIG. 3 is a perspective view of a plurality of airfoils, according to an embodiment of the present disclosure;
FIG. 4 is a cross-sectional view of one of the airfoils of FIG. 3;
FIG. 5 is a cross-sectional view of an airfoil according to another embodiment of the present disclosure;
FIG. 6 is a cross-sectional view of an airfoil according to another embodiment of the present disclosure;
FIG. 7 is a cross-sectional view of an airfoil according to another embodiment that does not fall under the claims of the present disclosure;
FIG. 8 is a cross-sectional view of an airfoil according to another embodiment that does not fall under the claims of the present disclosure; and
FIG. 9 is a cross-sectional view of an airfoil according to another embodiment that does not fall under the claims of the present disclosure.

While the present disclosure is susceptible to various modifications and alternative constructions, certain illustrative embodiments thereof will be shown and described below in detail.

### Detailed Description

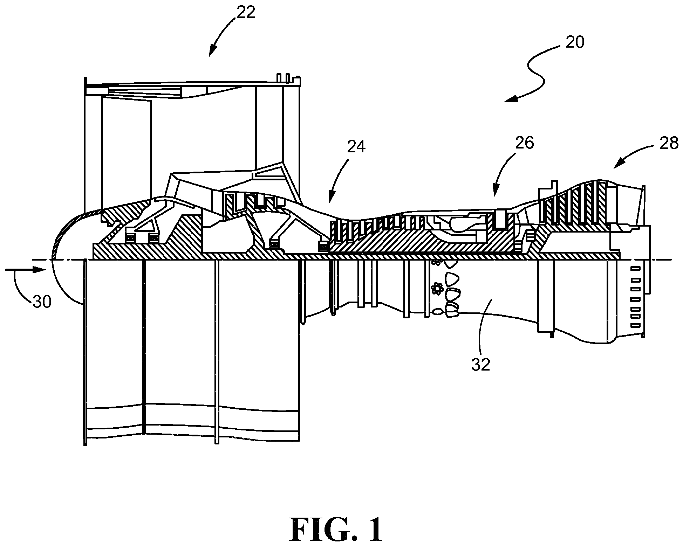

Referring now to the drawings, and with specific reference to FIG. 1, in accordance with the teachings of the disclosure, an exemplary gas turbine engine 20 is shown. The gas turbine engine 20 may generally comprise a fan section 22 which draws ambient air into the engine 20, a compressor section 24 where air is pressurized, a combustor 26 downstream of the compressor section which mixes and ignites the compressed air with fuel and thereby generates hot combustion gases, a turbine section 28 downstream of the combustor 26 for extracting power from the hot combustion gases, and an annular flow path 30 extending axially through each. A generally cylindrical engine casing 32 may circumscribe the fan section 22, compressor section 24, combustor section 26, and turbine section 28. Gas turbine engine 20 may be used on an aircraft for generating thrust or power, or in land-based operations for generating power as well.

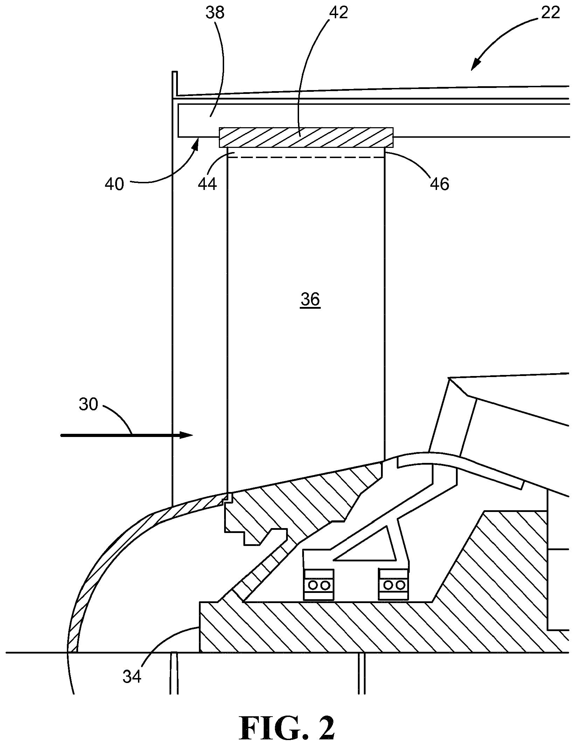

Turning now to FIGS. 2-4, with continued reference to FIG. 1, the fan section 22 of the gas turbine engine 20 may comprise a rotor 34 and a plurality of airfoils 36 extending radially therefrom. The plurality of airfoils 36 may be circumferentially spaced apart around the rotor 34. The engine casing 32 may include a fan case 38 enclosing the fan section 22 and surrounding the rotor 34 and plurality of airfoils 36. On an inner surface 40 circumscribing the plurality of airfoils 36, the fan case 38 may include a rub strip or an abradable seal 42 to minimize a clearance distance between the airfoils 36 and the fan case 38. Furthermore, the seal 42 may be configured to abrade when the airfoils 36 rotate against the seal 42 during operation, thereby preventing wear of the airfoils 36. For example, the seal 42 may be a sprayed on abradable coating or a fabricated abradable seal.

In addition, the airfoils 36 may include a hard plating 44 (e.g., nickel plating, aluminum oxide plating, and the like) in order to enhance the wear resistance of the airfoils when rotating against the abradable seal 42. For example, a tip 46 of each of the airfoils 36 may undergo treatment for increased wear resistance, including but not limited to, anodizing, micro arc oxidation, cathodic arc deposition, and the like. It is to be understood that the abradable seal 42 may also be applied to the engine casing 32 surrounding airfoils of the compressor and/or turbine sections 24, 28, and that the airfoils in the compressor and/or turbine sections 24, 28 may also include a hard plating. Furthermore, to improve erosion resistance, the airfoil surfaces may be coated with an erosion resistant coating, such as, polyurethane.

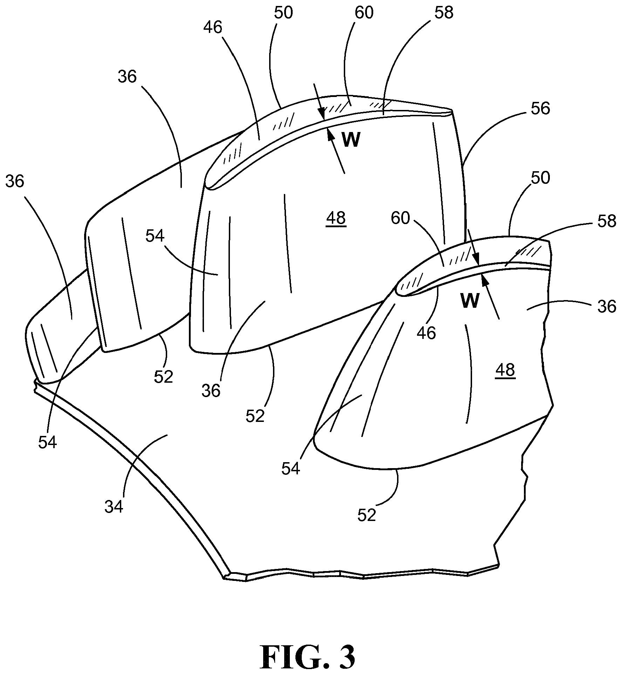

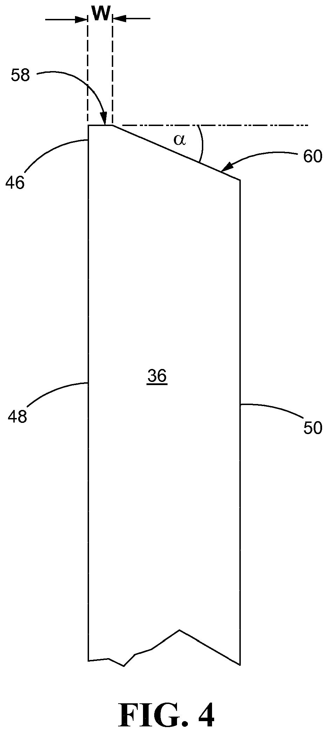

As shown best in FIGS. 3 and 4, each airfoil 36 may comprise a first side 48 and an opposite second side 50 extending radially from a base 52 to the tip 46 and extending axially from a leading edge 54 to a trailing edge 56 (downstream of the leading edge 54). The airfoil 36 may have a camber with the first side 48 comprising a pressure side and the second side 50 comprising a suction side, although it is also possible that the airfoil 36 may have no camber. The airfoil 36 may be composed of, without limitation, aluminum, titanium, composite materials, and the like. It is to be understood that the airfoil 36 may comprise a fan blade in the fan section 22, as well as a rotor blade in the compressor section 24 and/or turbine section 28 of the gas turbine engine 20.

In order to effectively rub against the seal 42 without causing excessive heat generation by friction, the tip 46 of the airfoil 36 may be designed as a cutting tool against the seal 42. For example, the tip 46 may be beveled or chamfered. The tip 46 may include a flat surface 58 and an oblique surface 60. Facing the fan case 38, the flat surface 58 of the tip 46 may be in sealing contact with the abradable seal 42. While the flat surface 58 may be generally parallel to the inner surface 40 of the fan case 38, the oblique surface 60 may be angled away from (e.g., not parallel to) the abradable seal 42 on the inner surface 40 of the fan case 38.

For example, the flat surface 58 may be adjacent to the first side 48 or pressure side of the airfoil 36. Along the first side 48, a width W of the flat surface 58 may be a same or may vary from the leading edge 54 to the trailing edge 56. In one example, the width W of the flat surface 58 may be at least 2.54 mm (0.1 in) from the leading edge 54 to the trailing edge 56. However, the width W of the flat surface 58 may be greater or less than 2.54 mm (0.1 in) as well. Although the flat surface 58 may extend over an entire length of the airfoil 36 from the leading edge 54 to the trailing edge 56, the flat surface 58 may also extend only partially between the leading edge 54 to the trailing edge 56. For instance, proximate the leading and trailing edges 54, 56, there may not be a flat surface.

The oblique surface 60 may descend from the flat surface 58 on the first side 48 to the second side 50 or suction side of the airfoil 36 at a clearance angle α. The clearance angle α may be between zero and five degrees (0-5°), although other angles are certainly possible. In so doing, the flat surface 58 of the tip 46 may abrade against the seal 42 during operation, while the clearance angle α and oblique surface 60 of the tip 46 may allow abraded material of the seal 42 to exit. Thus, the clearance angle α and oblique surface 60 may reduce a surface area in contact with the seal 42, thereby reducing frictional heating between the airfoils 36 and the fan case 38 or engine casing 32.

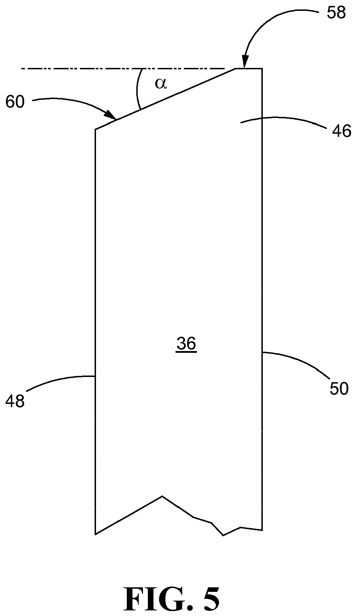

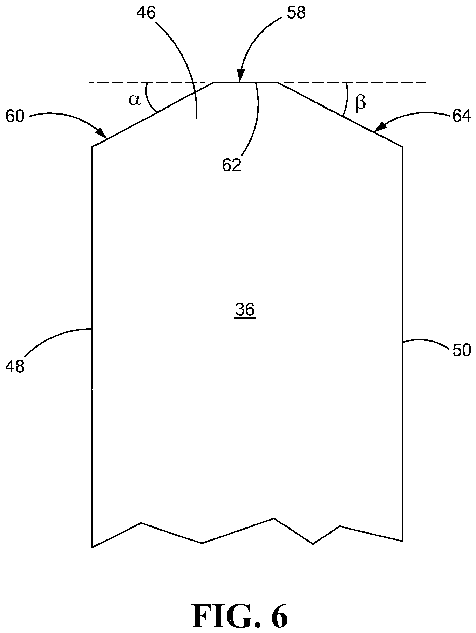

The flat surface 58 and the oblique surface 60 may be arranged in other configurations than that shown in FIGS. 3 & 4. For example, the flat surface 58 may lie anywhere between the first side 48 and the second side 50. As shown best in FIG. 5, the flat surface 58 may be adjacent to the second side 50 or suction side of the airfoil 36, and the oblique surface 60 may descend from the flat surface 58 on the second side 50 to the first side 48 at the clearance angle α. In another example, the flat surface 58 may be proximate a center 62 of the airfoil 36, as shown best in FIG. 6. The oblique surface 60 may descend from the flat surface 58 in the center 62 to the first side 48 at the clearance angle α, and the tip 46 may include a second oblique surface 64 descending from the flat surface 58 in the center 62 to the second side 50 of the airfoil 36 at a second clearance angle β. The clearance angle α of the oblique surface 60 and the clearance angle β of the second oblique surface 64 may be equal to each other, or the clearance angles α and β may be of varying degrees, as well.

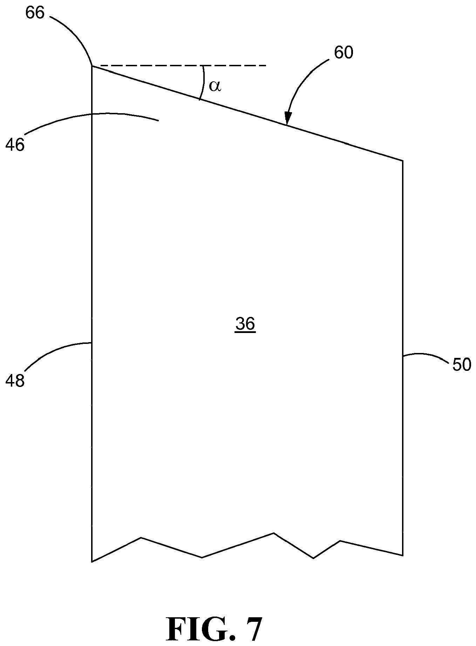

As shown best in FIG. 7, that does not fall under the claims, the tip 46 may not include the flat surface 58 and may solely comprise the oblique surface 60 angled away from the fan case 38 or engine casing 32, depending on the strength and hardness of the tip 46. For example, the oblique surface 60 may directly descend from the first side 48 to the second side 50 at the clearance angle α, with an apex 66 of the tip 46 lying on the first side 48. In sealing contact with the abradable seal 42 on the fan case 38 or engine casing 32, the apex 66 may abrade the seal 42 during operation, while the oblique surface 60 minimizes frictional heating between the tip 46 and seal 42. The apex 66 may be in the form of a small fillet instead of a sharp edge.

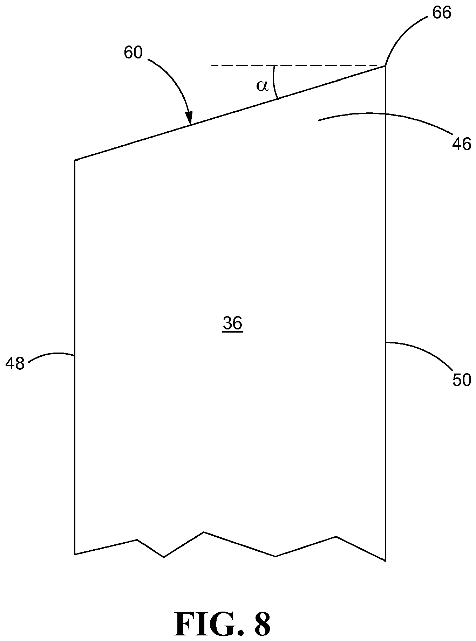

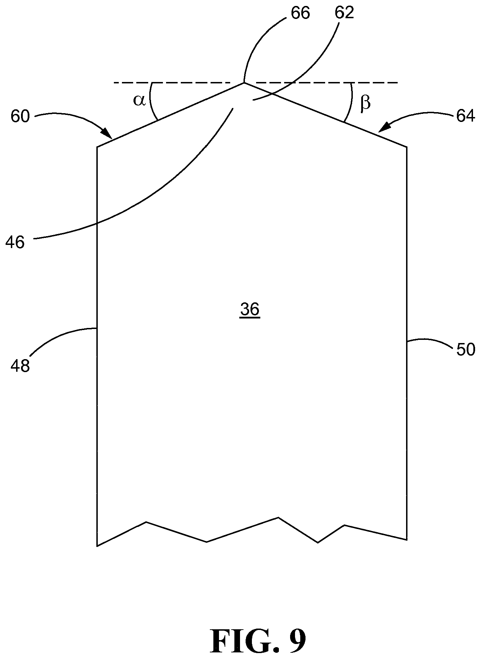

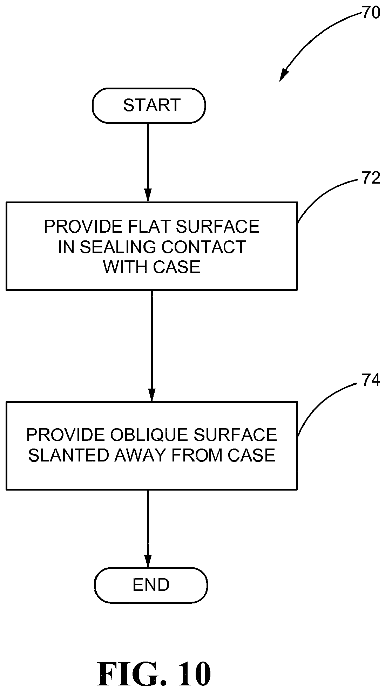

In another example shown best in FIG. 8, that does not fall under the claims, the apex 66 may lie on the second side 50, and the oblique surface 60 may directly descend from the second side 50 to the first side 48 at the clearance angle α. Alternatively, the apex 66 may lie on the center 62 of the airfoil, as shown best in FIG. 9, that does not fall under the claims, with the oblique surface 60 descending from the center 62 to the first side 48 at the clearance angle α, and the second oblique surface 64 descending from the center 62 to the second side 50 at the clearance angle α. It is to be understood that various alternative configurations for the cutting tool tip 46 than that shown in FIGS. 3-6, as well as FIGS 7-9 that do not fall under the claims, are certainly possible. For example, the apex 66 of FIGS 7-9 that do not fall under the claims may be in the form of a small fillet instead of a sharp edge.

In addition, the flat surface 58, oblique surfaces 60, 64, and/or apex 66 of FIGS 7-9 that do not fall under the claims, may undergo treatment for increased wear resistance, including but not limited to, anodizing, micro arc oxidation, cathodic arc deposition, and the like. In so doing, the flat surface 58, oblique surfaces 60, 64, and/or apex 66 of FIGS 7-9 that do not fall under the claims, may include a hard plating (e.g., erosion resistant polyurethane coating, nickel plating, aluminum oxide plating, and the like) that reinforces a strength of the tip 46 when rotating against the abradable seal 42.

With continued reference to FIGS. 1-6, as well as FIGS 7-9 that do not fall under the claims, a method 70 for reducing frictional heating between airfoils 36 and the casing 32 of the gas turbine engine 20 is disclosed, according to another embodiment of the present disclosure. The flat surface 58 is provided on the tip 46 of each of the airfoils 36 in sealing contact with the casing 32. The oblique surface 60 is provided on the tip 46 of each of the airfoils 36. The oblique surface 60 is slanted away from the casing 32, such as at the clearance angle α. Furthermore, the oblique surface 60 may descend from the flat surface 58. For example, the flat and/or oblique surfaces 58, 60 may be provided via milling, machining, and other cutting procedures.

### Industrial Applicability

From the foregoing, it can be seen that the teachings of this disclosure can find industrial application in any number of different situations, including but not limited to, gas turbine engines. Such engines may be used, for example, on aircraft for generating thrust, or in land, marine, or aircraft applications for generating power.

The present disclosure provides an airfoil design and method for reducing frictional heating between airfoils and a casing of a gas turbine engine. By configuring the tip of the airfoil to be a cutting tool against the rub strip or abradable seal of the engine casing, frictional heating is significantly reduced. More specifically, the tip may include a flat surface in contact with the coating and an oblique surface that is angled away from the engine casing at a clearance angle.

In sealing contact with the coating, the flat surface of the tip may minimize a clearance distance between the airfoil and the casing, thereby optimizing fuel performance and engine efficiency. In addition, the clearance angle and oblique surface of the blade tip reduce the surface area in contact with the coating and allow rub strip material to exit, thereby lowering heat generation when the airfoils rotate against the rub strip. By lowering heat generation between the airfoils and casing, degradation of the polyurethane erosion resistant coating on the airfoil tips may be reduced or eliminated. Furthermore, preventing the erosion resistant coating on the airfoil tips from peeling off provides cost saving benefits, such as, during maintenance procedures.

While the foregoing detailed description has been given and provided with respect to certain specific embodiments, it is to be understood that the scope of the disclosure should not be limited to such embodiments, but that the same are provided simply for enablement and best mode purposes. The breadth of the present disclosure is broader than the embodiments specifically disclosed, and includes all embodiments and equivalents encompassed within the claims appended hereto as well.

## Claims

1. An airfoil (36) for a gas turbine engine (20), comprising:
a first side (48); and
a second side (50) opposite the first side (48), the first side (48) and the second side (50) extending axially from a leading edge (54) to a trailing edge (56) and radially from a base (52) to a tip (46), the tip (46) including an oblique surface (60) between the first side (48) and the second side (50);
wherein the tip (46) further includes a flat surface (58) between the first side (48) and the second side (50), wherein the flat surface (58) is either adjacent to the first side (48), the oblique surface (60) descending from the flat surface (58) to the second side (50); or adjacent to the second side (50), the oblique surface (60) descending from the flat surface (58) to the first side (48);
**characterized in that** the flat surface (58) and the oblique surface (60) include a hard plating reinforcement.

2. The airfoil of any preceding claim, wherein the flat surface (58) is proximate a center (62) of the tip (46), the oblique surface (60) descending from the flat surface (58) to the first side (48), and wherein the tip (46) further includes a second oblique surface (64) descending from the flat surface (58) to the second side (50).

3. The airfoil of any of any preceding claim, wherein a width of the flat surface (58) is at least 2.54 mm (0.1 in).

4. The airfoil of any preceding claim, wherein a clearance angle (α,β) of the oblique surface or surfaces (60,64) from the flat surface (58) is between zero and five degrees (0-5°).

5. A gas turbine engine (20), comprising:
a fan section (22);
a compressor section (24) downstream of the fan section (22);
a combustor section (26) downstream of the compressor section (24); and
a turbine section (28) downstream of the combustor section (26), at least one of the fan section (22), the compressor section (24), and the turbine section (28) including:
a rotor (34),
a plurality of airfoils (36) as set forth in any preceding claim extending radially from the rotor (34), and
a case (38) surrounding the rotor (34) and the plurality of airfoils (36).

6. The gas turbine engine of claim 5, wherein the flat surfaces (58) of the tips (46) of the airfoils (36) and the case (38) are in sealing contact.

7. The gas turbine engine of claim 5 or 6, wherein the case (38) includes an abradable seal (42) on an inner surface of the case (38), wherein, optionally, the flat surface (58) and the oblique surface (60,64) on the tip (46) of each of the airfoils (36) are designed to cut through the abradable seal (42) of the case (38).

8. The gas turbine engine of any of claims 5 to 7, wherein the flat surface (58) and the oblique surface (60,64) of each of the tips (46) of the airfoils (36) underwent treatment for increased wear resistance.

9. The gas turbine engine of any of claims 5 to 8, wherein a width of the flat surface (58) varies from a leading edge (54) to a trailing edge (56) of the airfoil (36).

10. A method for reducing frictional heating between airfoils (36) and a case (38) of a gas turbine engine (20), the method comprising:
providing an oblique surface (60,64) on a tip (46) of each of the airfoils (36), the oblique surface (60,64) slanted away from the case (38); and operating the gas turbine engine (20) using the oblique surfaces (60,64) and, providing a flat surface (58) disposed adjacent to at least one of a first side (48) and a second side (50) of an airfoil (36) in sealing contact with the case (38), the oblique surface (60,64) descending from the flat surface (58) to at least one of the first side (48) and the second side (50) of the airfoil (36),
**characterized in that** the flat surface (58) and the oblique surface (60,64) include a hard plating reinforcement.

## Patentansprüche

1. Schaufelprofil (36) für ein Gasturbinentriebwerk (20), das Folgendes umfasst:
eine erste Seite (48); und
eine zweite Seite (50) gegenüber der ersten Seite (48), wobei die erste Seite (48) und die zweite Seite (50) sich axial von einer Vorderkante (54) zu einer Hinterkante (56) und radial von einer Basis (52) zu einer Spitze (46) erstrecken, wobei die Spitze (46) eine schräge Fläche (60) zwischen der ersten Seite (48) und der zweiten Seite (50) beinhaltet,
wobei die Spitze (46) ferner eine flache Fläche (58) zwischen der ersten Seite (48) und der zweiten Seite (50) beinhaltet, wobei die flache Fläche (58) entweder der ersten Seite (48) benachbart ist, wobei die schräge Fläche (60) von der flachen Fläche (58) zu der zweiten Seite (50) abfällt; oder der zweiten Seite (50) benachbart ist, wobei die schräge Fläche (60) von der flachen Fläche (58) zu der ersten Seite (48) abfällt;
**dadurch gekennzeichnet, dass** die flache Fläche (58) und die schräge Fläche (60) eine Hartplattierungsverstärkung beinhalten.

2. Schaufelprofil nach einem der vorhergehenden Ansprüche, wobei die flache Fläche (58) sich in der Nähe einer Mitte (62) der Spitze (46) befindet, wobei die schräge Fläche (60) von der flachen Fläche (58) zu der ersten Seite (48) abfällt, und wobei die Spitze (46) ferner eine zweite schräge Fläche (64) beinhaltet, die von der flachen Fläche (58) zu der zweiten Seite (50) abfällt.

3. Schaufelprofil nach einem der vorhergehenden Ansprüche, wobei eine Breite der flachen Fläche (58) mindestens 2,54 mm (0,1 in) beträgt.

4. Schaufelprofil nach einem der vorhergehenden Ansprüche, wobei ein Freiwinkel (α, β) der schrägen Fläche oder Flächen (60, 64) ausgehend von der flachen Fläche (58) zwischen null und fünf Grad (0-5 °) beträgt.

5. Gasturbinentriebwerk (20), das Folgendes umfasst:
einen Lüfterbereich (22);
einen Verdichterbereich (24) stromabwärts des Lüfterbereichs (22) ;
einen Brennkammerbereich (26) stromabwärts des Verdichterbereichs (24); und
einen Turbinenbereich (28) stromabwärts des Brennkammerbereichs (26), wobei mindestens eines von dem Brennkammerbereich (22), dem Verdichterbereich (24) und dem Turbinenbereich (28) Folgendes beinhaltet:
einen Rotor (34),
eine Vielzahl von Schaufelprofilen (36) nach einem der vorhergehenden Ansprüche, die sich von dem Rotor (34) erstreckt, und
ein Gehäuse (38), das den Rotor (34) und die Vielzahl von Schaufelprofilen (36) umgibt.

6. Gasturbinentriebwerk nach Anspruch 5, wobei die flachen Flächen (58) der Spitzen (46) der Schaufelprofile (36) und das Gehäuse (38) in einem Dichtkontakt stehen.

7. Gasturbinentriebwerk nach Anspruch 5 oder 6, wobei das Gehäuse (38) eine abreibbare Dichtung (42) auf einer Innenfläche des Gehäuses (38) beinhaltet, wobei die flache Fläche (58) und die schräge Fläche (60, 64) optional an der Spitze (46) jedes der Schaufelprofile (36) dazu ausgestaltet sind, durch die abreibbare Dichtung (42) des Gehäuses (38) zu schneiden.

8. Gasturbinentriebwerk nach einem der Ansprüche 5 bis 7, wobei die flache Fläche (58) und die schräge Fläche (60, 64) jeder der Spitzen (46) der Schaufelprofile (36) einer Behandlung für einen erhöhten Verschleißwiderstand unterzogen wurden.

9. Gasturbinentriebwerk nach einem der Ansprüche 5 bis 8, wobei eine Breite der flachen Fläche (58) von einer Vorderkante (54) zu einer Hinterkante (56) des Schaufelprofils (36) variiert.

10. Verfahren zum Reduzieren einer Erhitzung durch Reibung zwischen Schaufelprofilen (36) und einem Gehäuse (38) eines Gasturbinentriebwerks (20), wobei das Verfahren Folgendes umfasst:
Bereitstellen einer schrägen Fläche (60, 64) an einer Spitze (46) jedes der Schaufelprofile (36), wobei die schräge Fläche (60, 64) von dem Gehäuse (38) weg geneigt ist; und
Betreiben des Gasturbinentriebwerks (20) unter Verwendung der schrägen Flächen (60, 64) und Bereitstellen einer flachen Fläche (58), die mindestens einer ersten Seite (48) und einer zweiten Seite (50) eines Schaufelprofils (36), das in Dichtkontakt mit dem Gehäuse (38) steht, benachbart angeordnet ist, wobei die schräge Fläche (60, 64) von der flachen Fläche (58) zu mindestens einem von der ersten Seite (48) und der zweiten Seite (50) des Schaufelprofils (36) abfällt,
**dadurch gekennzeichnet, dass** die flache Fläche (58) und die schräge Fläche (60, 64) eine Hartplattierungsverstärkung beinhalten.

## Revendications

1. Aube (36) pour un moteur à turbine à gaz (20), comprenant :
un premier côté (48) ; et
un second côté (50) opposé au premier côté (48), le premier côté (48) et le second côté (50) s'étendant axialement d'un bord d'attaque (54) à un bord de fuite (56) et radialement d'une base (52) à une pointe (46), la pointe (46) comportant une surface oblique (60) entre le premier côté (48) et le second côté (50) ;
dans laquelle la pointe (46) comporte en outre une surface plane (58) entre le premier côté (48) et le second côté (50), dans laquelle la surface plane (58) est soit adjacente au premier côté (48), la surface oblique (60) descendant de la surface plane (58) au second côté (50) ; soit adjacente au second côté (50), la surface oblique (60) descendant de la surface plane (58) au premier côté (48) ;
**caractérisée en ce que** la surface plane et la surface (58) oblique (60) comportent un renfort de placage dur.

2. Aube selon une quelconque revendication précédente, dans laquelle la surface plane (58) est à proximité d'un centre (62) de la pointe (46), la surface oblique (60) descendant de la surface plane (58) au premier côté (48), et dans laquelle la pointe (46) comporte en outre une seconde surface oblique (64) descendant de la surface plane (58) au second côté (50).

3. Aube selon une quelconque revendication précédente, dans laquelle une largeur de la surface plane (58) est d'au moins 2,54 mm (0,1 pouce).

4. Aube selon une quelconque revendication précédente, dans laquelle un angle de dégagement (α, β) de la surface ou des surfaces obliques (60, 64) par rapport à la surface plane (58) est compris entre zéro et cinq degrés (0-5°).

5. Moteur à turbine à gaz (20), comprenant :
une section de ventilateur (22) ;
une section de compresseur (24) en aval de la section de ventilateur (22) ;
une section de chambre de combustion (26) en aval de la section de compresseur (24) ; et
une section de turbine (28) en aval de la section de chambre de combustion (26), au moins l'une de la section de ventilateur (22), de la section de compresseur (24) et de la section de turbine (28), comportant :
un rotor (34),
une pluralité d'aubes (36) selon une quelconque revendication précédente s'étendant radialement depuis le rotor (34), et
un carter (38) entourant le rotor (34) et la pluralité d'aubes (36).

6. Moteur à turbine à gaz selon la revendication 5, dans laquelle les surfaces planes (58) des pointes (46) des aubes (36) et le carter (38) sont en contact étanche.

7. Moteur à turbine à gaz selon la revendication 5 ou 6, dans lequel le carter (38) comporte un joint abradable (42) sur une surface interne du carter (38), dans lequel, éventuellement, la surface plane (58) et la surface oblique (60, 64) sur la pointe (46) de chacune des aubes (36) sont conçues pour couper à travers le joint abradable (42) du carter (38).

8. Moteur à turbine à gaz selon l'une quelconque des revendications 5 à 7, dans lequel la surface plane (58) et la surface oblique (60,64) de chacune des pointes (46) des aubes (36) ont subi un traitement pour une résistance à l'usure accrue.

9. Moteur à turbine à gaz selon l'une quelconque des revendications 5 à 8, dans lequel une largeur de la surface plane (58) varie d'un bord d'attaque (54) à un bord de fuite (56) de l'aube (36).

10. Procédé de réduction du réchauffement par friction entre des aubes (36) et un carter (38) d'un moteur à turbine à gaz (20), le procédé comprenant :
la fourniture d'une surface oblique (60, 64) sur une pointe (46) de chacune des aubes (36), la surface oblique (60, 64) étant inclinée à l'écart du carter (38) ; et le fonctionnement du moteur à turbine à gaz (20) à l'aide des surfaces obliques (60, 64) et la fourniture d'une surface plane (58) disposée adjacente à au moins l'un d'un premier côté (48) et d'un second côté (50) d'une aube (36) en contact étanche avec le carter (38), la surface oblique (60,64) descendant de la surface plane (58) à au moins l'un du premier côté (48) et du second côté (50) de l'aube (36), **caractérisé en ce que** la surface plane (58) et la surface oblique (60, 64) comportent un renfort de placage dur.
